# EUROPEAN PATENT SPECIFICATION

(11) **EP 4 086 037 B1**
(45) Date of publication and mention of the grant of the patent: **08.04.2026**
(21) Application number: 22181443.7
(22) Date of filing: 18.03.2021
(51) Int. Cl.: B23Q 7/04, B25J 9/00, B23Q 11/00

(54) **METHOD FOR USING A MACHINE TOOL WITH DOUBLE INLET AND DOUBLE OUTLET**
VERFAHREN ZUR VERWENDUNG EINER WERKZEUGMASCHINE MIT DOPPELEINGANG UND DOPPELAUSGANG
PROCÉDÉ D'UTILISATION D'UNE MACHINE-OUTIL À DOUBLE ENTRÉE ET DOUBLE SORTIE

(30) Priority: 30.03.2020 IT 202000006652
(43) Date of publication of application: 09.11.2022
(62) Divisional of application: 21163383.9
(73) Proprietor: SCM Group S.p.A., 47921 Rimini (RN) (IT)
(72) Inventor: NERI, Alessandro, 47921 Rimini (IT); ROSSI, Simone, 47921 Rimini (IT)
(74) Representative: Tiburzi, Andrea

(56) References cited:
- DE-A1- 102015 008 681
- DE-A1- 102017 220 934
- DE-U1- 20 005 191

## Description

The present invention relates to a method for using a machine tool with double inlet and double outlet. DE 10 2015 008681 A1 discloses a method for using a machine tool for machining workpieces, comprising:
- an operating unit
- a first and a second inlet and outlet zone;
- a third zone arranged adjacent to said second inlet and outlet zone on the opposite side with respect to said operating unit;
- second movement means for transporting at least one workpiece from said third zone to said second inlet and outlet zone and from said second inlet and outlet zone to said third zone;
- a manipulator configured to load at least one workpiece in said third zone and to unload at least one workpiece from said third zone.

The purpose of the present invention is to provide a method with a machine tool for machining pieces, which is configured in such a way as to ease the operations of loading the pieces to be machined and unloading the machined pieces.

The present invention is a method for using a machine tool for machining workpieces, according to claim 1 or 2.

Preferably according to the invention, said machine tool also comprises second reference means for attributing at least one spatial reference to at least one workpiece entering said operating unit from said second inlet and outlet zone, wherein said second reference means comprise at least a second abutment element which is movable between an inactive position, wherein said at least a second abutment element does not interfere, in use, with at least one workpiece transported from said second inlet and outlet zone toward said operating unit, and an operating position, wherein said at least a second abutment element interferes, in use, with at least one workpiece transported from said second inlet and outlet zone toward said operating unit; and in that said method comprises the further step of bringing, by means of said robot or manipulator, at least one workpiece arranged on said third zone to abut with said at least one second abutment element in said operating position.

The present invention will be now described, for illustrative but not limitative purposes, according to its preferred embodiments, with particular reference to the figures of the enclosed drawings, wherein:

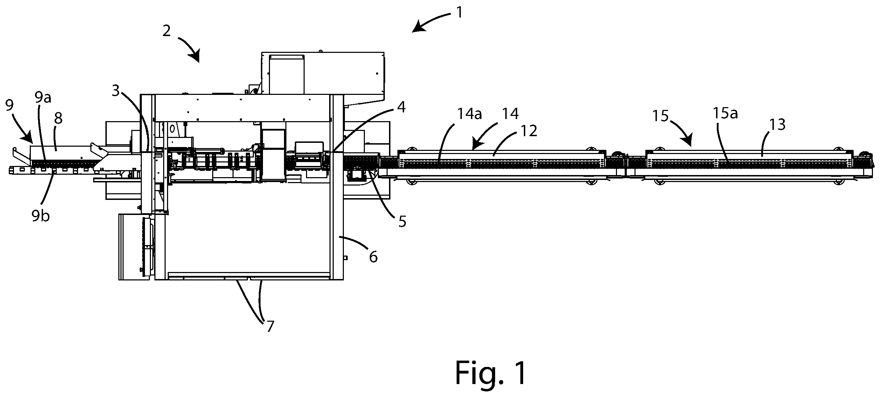

figure 1 is a top plan view of a machine tool according to the present invention;

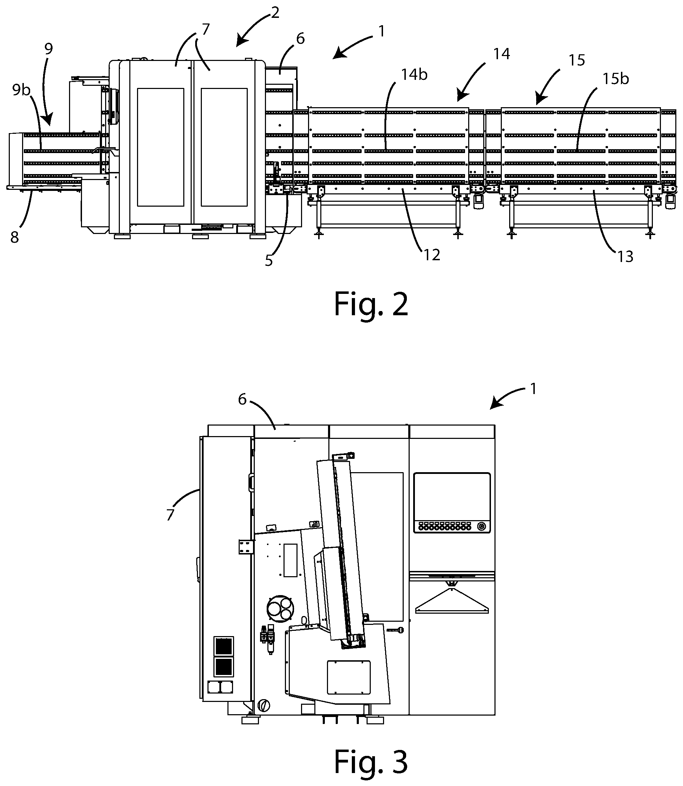

figure 2 is a front view of the machine tool shown in figure 1;
figure 3 is a side view of the machine tool shown in figures 1 and 2;

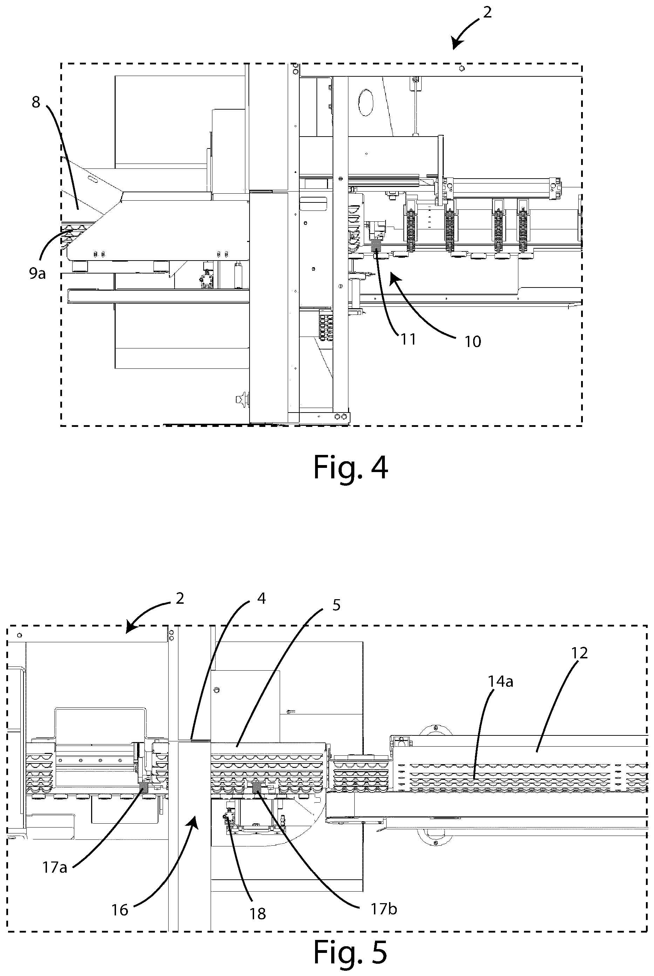

figure 4 is a first detail view extracted from figure 1;
figure 5 is a second detail view extracted from figure 1; and

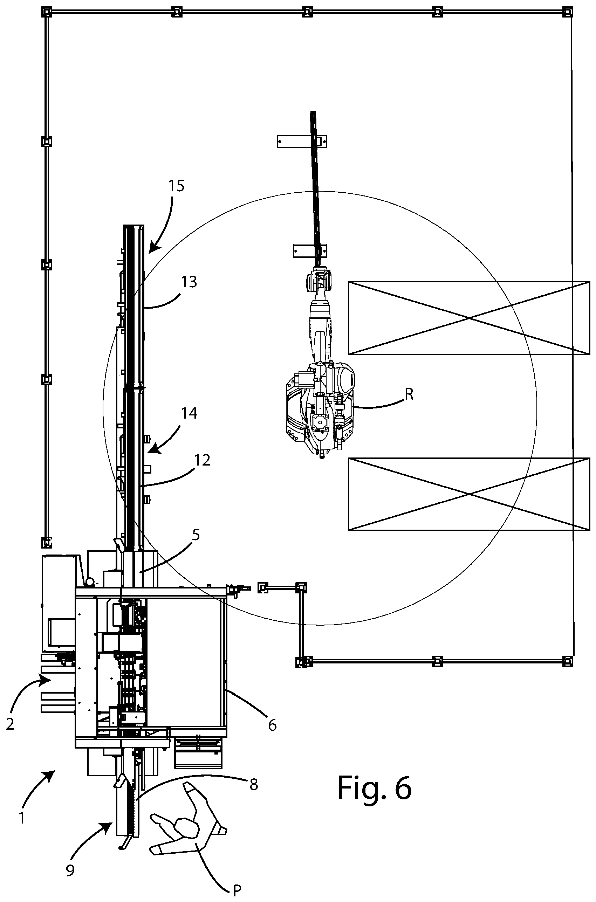

figure 6 is a plan view, from above, of the machine tool shown in figures 1-5, where a human operator and a robot for loading and unloading pieces are also illustrated.

In the various figures, similar parts will be indicated by the same reference numbers.

In the accompanying figures, the numerical reference 1 indicates, as a whole, a machine tool for machining panels or pieces of another type and/or shape.

Said machine tool 1 comprises an operating unit 2, in which a first inlet or outlet 3 is defined to allow the entry of the panels to be machined into the operating unit 2 or the exit of the machined panels from the operating unit 2 itself, and a second inlet or outlet 4 to allow, also in this case, the entry of the panels to be machined or the exit of the machined panels.

The first inlet or outlet opening 3 and the second inlet or outlet opening 4 are mutually opposed, i.e., identified on two opposite sides of the operating unit 2.

Operative means are provided in the operating unit 2 to perform at least one machining on the panels entering from the first inlet or outlet opening 3 or from the second inlet or outlet opening 4.

For example, as shown in the attached figures, one or more boring members can be provided in the operating unit 2, to perform one or more boring operations on the panels.

The operating unit 2 is enclosed in a case or in a protection cabin 6, in which two adjacent doors 7 are provided to allow the access to it by an operator P who has to carry out, for example, control and/or maintenance operations on the operating unit 2 itself.

The machine tool 1 also comprises a first support 8, i.e., a first inlet and outlet area, arranged adjacent to the first inlet or outlet opening 3, and equipped with a first transport system 9 for transporting towards said first inlet or outlet opening 3 of the operating unit 2 the panels loaded in a substantially vertical position on the first support 8 by a human operator P and vice versa, or from the aforementioned first inlet or outlet opening 3 to the first support 8.

In particular, the first transport system 9 includes a conveyor belt 9a, or motorized rollers, on a lower horizontal plane and a plurality of idle rollers 9b arranged on a substantially vertical or slightly inclined plane, with respect to a vertical plane, to allow the displacement of the panels from the first support 8 towards the first inlet or outlet opening 3 of the operating unit 2 and vice versa.

At the interface area between the first support 8 and the operating unit 2, a first reference system 10 is provided to assign a spatial reference to the panel arranged on the first support 8 before its entry into the operating unit 2 through the first opening input or output 3.

In the present case shown in the attached figures, this first reference system 10 comprises a first pin 11, horizontally movable between a retracted or inactive position, in which it does not interfere with the panel transported by the first support 8 towards the operating unit 2, and an extracted or operative position, in which it interferes with the panel transported by the first support 8 towards the operative unit 2, abutting one side of the panel corresponding to the relative thickness.

The same first reference system 10 also includes at least one sensor for detecting when the panel abuts with the first pin 11 in the extracted or operative position.

In a position adjacent to the second inlet or outlet opening 4 of the operating unit 2, there are provided in sequence a second support 5, i.e., a second inlet and outlet area, a third support 12 or a third area and a fourth support 13, i.e., a fourth zone, so that the second support 5 is arranged between the operating unit 2 and the third support 12, and that the latter is in turn between the second support 5 and the fourth support 13.

The machine tool 1 also provides grippers 18, movable between the first support 8 and the second support 5, to grip and move the panels from the first support 8 to the operating unit 2, and vice versa, and from the second support 5 to the operating unit 2, and vice versa.

The same machine tool 1 also comprises a second transport system 14 for transporting the panels from the third support 12 to the second support 5, and vice versa, and a third transport system 15 for transporting the panels from the fourth support 13 to the third support 12, and vice versa.

Like the first transport system 9, the second transport system 14 and the third transport system 15 also comprise a respective conveyor belt 14a, 15a, or respective motorized rollers, on a lower horizontal plane, and a respective plurality of idle rollers 14b, 15b, arranged on a substantially vertical or slightly inclined plane with respect to a vertical plane, to allow, in fact, the displacement of the panels in a substantially vertical or slightly inclined position with respect to a vertical plane.

The transit trajectory of the panels from the first support 8 to the fourth support 13, through the operating unit 2, the second support 5 and the third support 12, is substantially straight and horizontal.

At the interface area between the second support 5 and the operating unit 2, a second reference system 16 is provided, to assign a spatial reference to the panel arranged on the second support 5, before its entry into the operating unit 2 through the second opening input or output 4.

In the case illustrated in the attached figures, the second reference system 16 comprises a second pin 17a and a third pin 17b horizontally movable, each one, between a respective retracted or inactive position, in which they do not interfere with the panel carried by the second support 5, to the operative unit 2, and an extracted or operative position, in which it interferes by abutting the panel transported by the second support 5 to the operative unit 2.

The actuation of said second pin 17a innstead of the third pin 17b, or vice versa, is determined according to the specific sizes of the panel to be transported from the second support 5 to the operating unit 2, for the execution of the foreseen machining.

The same second reference system 16 also includes at least one sensor for detecting when the panel comes into contact with the second pin 17a or with the third pin 17b in the respective extracted or operative position.

On the basis of further variants of the present invention, the first 10 and the second 16 reference system described above can alternatively comprise one or more optical sensors, and/or one or more magnetic sensors, and/or one or more acoustic sensors, and/or one or more sensors of another type.

The machine tool 1 also comprises a robot R, or a manipulator, placed close to the second support 5 or of the third support 12 or of the fourth support 13, for the automatic execution of the loading and unloading operations of the panels from said third support 12 and fourth support 13.

Therefore, in this way this robot R, or manipulator, will operate in a separate area with respect to the area of competence, or the area of action, of the aforementioned human operator P in charge of loading and unloading the panels from the first support 8.

The aforementioned machine tool 1 also comprises a logic control unit operatively connected to the operating unit 2, to the first 10 and to the second 16 reference system, to the first transport system 9, to the second transport system 14, to the third transport system 15, to the grippers 18, and to the aforementioned robot R or manipulator, in such a way as to allow the coordination and interoperability of these operating members and the correct execution of the loading and unloading operations of the panels and of the operations foreseen for the latter in the operating unit 2.

The machine tool 1 described above is therefore configured in such a way as to allow the panels to be processed being placed in the operating unit 2 by making them pass through the first inlet or outlet opening 3 or through the second inlet or outlet opening 4, by moving the movable grippers 18.

Similarly, the machined panels can be made to leave the operating unit 2 through the second inlet or outlet opening 4 or through the first inlet or outlet opening 3 by moving the movable grippers 18.

It follows therefore that the machine tool 1 lends itself to different modes of use.

In particular, to maximize the production level of the machine tool 1 and reduce its downtime, it is possible to program the robot R or the manipulator in such a way that, while the operating unit 2 is working a given first panel, the robot R takes a second panel, bringing it near the third support 12.

Then, at the end of the operations foreseen on the first panel, the latter is transported onto the fourth support 13, passing through the second support 5 and the third support 12.

As soon as the first panel reaches the fourth support 13, the robot R proceeds, in sequence, to load the second panel onto the third support 12 and unload the first panel from the fourth support 13, while the same second panel is transported from the third support 12 towards the operating unit 2 for the execution of the foreseen machinings.

The work cycle just described can be clearly reiterated for an indefinite number of times.

A further method for using the machine 1, on the other hand, provides that while the operating unit 2 is processing a given first panel, the robot R takes a second panel and loads it onto the fourth support 13.

Then, at the end of the operations foreseen on the first panel, the latter is transported from the operating unit 2, to the third support 12, from which it is picked up by the robot R, allowing at this point the transport of the second panel from the fourth support 13 to the operating unit 2, through the third support 12, just released, and the second support 5.

Furthermore, if the second panel is small, it can be provided that when this panel is transported from the fourth support 13 to the third support 12 before reaching the operating unit 2, the robot R approaches it to the stop provided by the aforementioned third pin 17b in the extracted or operative position.

Also in this case, the work cycle can be repeated for an indefinite number of times.

As can be seen from the foregoing description, the machine tool 1 according to the present invention has a structure such as to allow a human operator and a robot or manipulator to carry out the loading and unloading operations on it of panels at the same time, without any risk for the safety of this human operator, as the area of action of the robot or manipulator does not interfere with that of the human operator.

Furthermore, the same machine tool combines a remarkable flexibility of use with high productivity.

## Claims

1. Method for using a machine tool (1) for machining workpieces, comprising:
- an operating unit (2) provided with operating means for executing at least one operation on a workpiece;
- a first inlet and outlet zone (3) for allowing the inlet of at least one workpiece to be machined into said operating unit;
- a second inlet and outlet zone (5) for allowing the inlet of at least one workpiece to be machined into said operating unit (2) and the outlet of at least one machined workpiece from said operating unit (2);
- a third zone (12) arranged adjacent to said second inlet and outlet zone (5) on the opposite side with respect to said operating unit (2);
- second movement means (14) for transporting at least one workpiece from said third zone (12) to said second inlet and outlet zone (5) and from said second inlet and outlet zone (5) to said third zone (12);
- a fourth zone (13) adjacent to said third inlet and outlet zone (12) on the opposite side with respect to said second inlet and outlet zone (5), so that said second inlet and outlet zone (12) is arranged between said third zone (13) and said second inlet and outlet zone (5);
- third movement means (15) for transporting at least one workpiece from said third zone (12) to said fourth zone (13) and vice versa;
- a robot (R) or manipulator configured to load at least one workpiece in said third zone (12) and/or in said fourth zone (13) and to unload at least one workpiece from said third zone (12) and/or from said fourth zone (13);
wherein said method comprises, in sequence, the steps of:
- processing a first workpiece by means of said operating unit (2) and simultaneously bringing a second workpiece in the vicinity of said third zone (12) by means of said robot (R) or manipulator;
- transporting said first workpiece from said operating unit (2) to said fourth zone (13);
- loading said second workpiece in said third zone (12) by means of said robot (R) or manipulator; and
- transporting said second workpiece from said third zone (12) to said operating unit (2) and simultaneously unloading said first workpiece from said fourth zone (13) by means of said robot (R) or manipulator.

2. Method for using a machine tool (1) for machining workpieces, comprising:
- an operating unit (2) provided with operating means for executing at least one operation on a workpiece;
- a first inlet and outlet zone (3) for allowing the inlet of at least one workpiece to be machined into said operating unit; - a second inlet and outlet zone (5) for allowing the inlet of at least one workpiece to be machined into said operating unit (2) and the outlet of at least one machined workpiece from said operating unit (2);
- a third zone (12) adjacent to said second inlet and outlet zone (5) on the opposite side with respect to said operating unit (2);
- second movement means (14) for transporting at least one workpiece from said third zone (12) to said second inlet and outlet zone (5) and from said second inlet and outlet zone (5) to said third zone (12);
- a fourth zone (13) adjacent to said third inlet and outlet zone (12) on the opposite side with respect to said second inlet and outlet zone (5), so that said second inlet and outlet zone (12) is arranged between said third zone (13) and said second inlet and outlet zone (5);
- third movement means (15) for transporting at least one workpiece from said third zone (12) to said fourth zone (13) and vice versa; and
- a robot (R) or manipulator configured to load at least one workpiece in said third zone (12) and/or in said fourth zone (13) and to unload at least one workpiece from said third zone (12) and/or from said fourth zone (13);
wherein said method comprises, in sequence, the steps of:
- processing a first workpiece by means of said operating unit (2) and simultaneously loading a second workpiece in said fourth zone (13) by means of said robot (R) or manipulator;
- transporting said first workpiece from said operating unit (2) to said third zone (12);
- unloading said first workpiece from said third zone (12) by means of said robot (R) or manipulator; and
- transporting said second workpiece from said fourth zone (13) to said operating unit (2).

3. Method according to claim 1 or 2, **characterized in that** said machine tool (1) also comprises second reference means (16) for attributing at least one spatial reference to at least one workpiece entering said operating unit (2) from said second inlet and outlet zone (5), wherein said second reference means (16) comprise at least a second abutment element (17a, 17b) which is movable between an inactive position, wherein said at least a second abutment element (17a, 17b) does not interfere, in use, with at least one workpiece transported from said second inlet and outlet zone (5) toward said operating unit (2), and an operating position, wherein said at least a second abutment element (17a, 17b) interferes, in use, with at least one workpiece transported from said second inlet and outlet zone (5) toward said operating unit (2);
and **in that** said method comprises the further step of bringing, by means of said robot (R) or manipulator, at least one workpiece arranged on said third zone (12) to abut with said at least one second abutment element (17a, 17b) in said operating position.

## Patentansprüche

1. Verfahren zur Verwendung einer Werkzeugmaschine (1) zur Bearbeitung von Werkstücken, umfassend:
- eine Bedieneinheit (2) mit Bedienelementen zum Ausführen mindestens einer Operation an einem Werkstück;
- einen ersten Einlass- und Auslassbereich (3), der den Einlass mindestens eines zu bearbeitenden Werkstücks in die genannte Arbeitseinheit ermöglicht;
- eine zweite Einlass- und Auslasszone (5), die den Einlass von mindestens einem zu bearbeitenden Werkstück in die Arbeitseinheit (2) und den Auslass von mindestens einem bearbeiteten Werkstück aus der Arbeitseinheit (2) ermöglicht;
- eine dritte Zone (12), die neben der zweiten Einlass- und Auslasszone (5) auf der gegenüberliegenden Seite in Bezug auf die Betriebseinheit (2) angeordnet ist;
- eine zweite Bewegungseinrichtung (14) zum Transportieren mindestens eines Werkstücks von der dritten Zone (12) zu der zweiten Einlass- und Auslasszone (5) und von der zweiten Einlass- und Auslasszone (5) zu der dritten Zone (12);
- eine vierte Zone (13), die an die dritte Einlass- und Auslasszone (12) auf der gegenüberliegenden Seite in Bezug auf die zweite Einlass- und Auslasszone (5) angrenzt, so dass die zweite Einlass- und Auslasszone (12) zwischen der dritten Zone (13) und der zweiten Einlass- und Auslasszone (5) angeordnet ist;
- ein drittes Bewegungsmittel (15) zum Transportieren mindestens eines Werkstücks von der dritten Zone (12) zur vierten Zone (13) und umgekehrt;
- einen Roboter (R) oder Manipulator, der so konfiguriert ist, dass er mindestens ein Werkstück in die dritte Zone (12) und/oder in die vierte Zone (13) lädt und mindestens ein Werkstück aus der dritten Zone (12) und/oder aus der vierten Zone (13) entnimmt; wobei das Verfahren nacheinander die folgenden Schritte umfasst:
- Bearbeitung eines ersten Werkstücks durch die genannte Arbeitseinheit (2) und gleichzeitiges Verbringen eines zweiten Werkstücks in die Nähe der genannten dritten Zone (12) durch den genannten Roboter (R) oder Manipulator;
- Transportieren des ersten Werkstücks von der Arbeitseinheit (2) zur vierten Zone (13);
- Laden des zweiten Werkstücks in die dritte Zone (12) mit Hilfe des Roboters (R) oder Manipulators; und
- Transportieren des zweiten Werkstücks aus der dritten Zone (12) zur Arbeitseinheit (2) und gleichzeitiges Entladen des ersten Werkstücks aus der vierten Zone (13) durch den Roboter (R) oder Manipulator.

2. Verfahren zur Verwendung einer Werkzeugmaschine (1) zur Bearbeitung von Werkstücken, umfassend:
- eine Bedieneinheit (2) mit Bedienelementen zum Ausführen mindestens einer Operation an einem Werkstück;
- einen ersten Einlass- und Auslassbereich (3), der den Einlass von mindestens einem zu bearbeitenden Werkstück in die Arbeitseinheit ermöglicht; - einen zweiten Einlass- und Auslassbereich (5), der den Einlass von mindestens einem zu bearbeitenden Werkstück in die Arbeitseinheit (2) und den Auslass von mindestens einem bearbeiteten Werkstück aus der Arbeitseinheit (2) ermöglicht;
- eine dritte Zone (12), die an die zweite Einlass- und Auslasszone (5) angrenzt und sich auf der gegenüberliegenden Seite der Betriebseinheit (2) befindet;
- eine zweite Bewegungseinrichtung (14) zum Transportieren mindestens eines Werkstücks von der dritten Zone (12) zu der zweiten Einlass- und Auslasszone (5) und von der zweiten Einlass- und Auslasszone (5) zu der dritten Zone (12);
- eine vierte Zone (13), die an die dritte Einlass- und Auslasszone (12) auf der gegenüberliegenden Seite in Bezug auf die zweite Einlass- und Auslasszone (5) angrenzt, so dass die zweite Einlass- und Auslasszone (12) zwischen der dritten Zone (13) und der zweiten Einlass- und Auslasszone (5) angeordnet ist;
- ein drittes Bewegungsmittel (15) zum Transportieren mindestens eines Werkstücks von der dritten Zone (12) zur vierten Zone (13) und umgekehrt; und
- einen Roboter (R) oder Manipulator, der so konfiguriert ist, dass er mindestens ein Werkstück in die dritte Zone (12) und/oder in die vierte Zone (13) lädt und mindestens ein Werkstück aus der dritten Zone (12) und/oder aus der vierten Zone (13) entnimmt; wobei das Verfahren nacheinander die folgenden Schritte umfasst:
- Bearbeitung eines ersten Werkstücks durch die Arbeitseinheit (2) und gleichzeitiges Laden eines zweiten Werkstücks in die vierte Zone (13) durch den Roboter (R) oder Manipulator;
- Transportieren des ersten Werkstücks von der Arbeitseinheit (2) zur dritten Zone (12);
- Entladen des ersten Werkstücks aus der dritten Zone (12) mit Hilfe des Roboters (R) oder Manipulators; und
- Transportieren des zweiten Werkstücks von der vierten Zone (13) zur Arbeitseinheit (2).

3. Verfahren nach Anspruch 1 oder 2, **dadurch gekennzeichnet, dass** die Werkzeugmaschine (1) auch zweite Referenzmittel (16) umfasst, um mindestens einem Werkstück, das von der zweiten Einlass- und Auslasszone (5) in die Arbeitseinheit (2) eintritt, mindestens eine räumliche Referenz zuzuordnen, wobei die zweiten Referenzmittel (16) mindestens ein zweites Anschlagelement (17a, 17b) umfassen, das zwischen einer inaktiven Position beweglich ist, wobei das mindestens eine zweite Anschlagelement (17a, 17b) im Gebrauch nicht mit mindestens einem Werkstück interferiert, das von der zweiten Einlass- und Auslasszone (5) in Richtung der Betriebseinheit (2) transportiert wird, und einer Betriebsposition, in der das mindestens eine zweite Anschlagelement (17a, 17b) im Gebrauch mit mindestens einem Werkstück interferiert, das von der zweiten Einlass- und Auslasszone (5) in Richtung der Betriebseinheit (2) transportiert wird;
und dass das Verfahren den weiteren Schritt umfasst, mittels des Roboters (R) oder Manipulators mindestens ein Werkstück, das auf der dritten Zone (12) angeordnet ist, zum Anstoßen an das mindestens eine zweite Anstoßelement (17a, 17b) in der Betriebsposition zu bringen.

## Revendications

1. Procédé d'utilisation d'une machine-outil (1) pour l'usinage de pièces, comprenant:
- une unité de commande (2) dotée de moyens de commande pour exécuter au moins une opération sur une pièce à usiner;
- une première zone d'entrée et de sortie (3) pour permettre l'entrée d'au moins une pièce à usiner dans ladite unité de travail;
- une deuxième zone d'entrée et de sortie (5) pour permettre l'entrée d'au moins une pièce à usiner dans ladite unité de travail (2) et la sortie d'au moins une pièce usinée de ladite unité de travail (2);
- une troisième zone (12), adjacente à la deuxième zone d'entrée et de sortie (5), du côté opposé à l'unité de commande (2);
- deuxième moyen de déplacement (14) pour transporter au moins une pièce de ladite troisième zone (12) à ladite deuxième zone d'entrée et de sortie (5) et de ladite deuxième zone d'entrée et de sortie (5) à ladite troisième zone (12);
- une quatrième zone (13) adjacente à ladite troisième zone d'entrée et de sortie (12) du côté opposé à ladite deuxième zone d'entrée et de sortie (5), de sorte que ladite deuxième zone d'entrée et de sortie (12) est disposée entre ladite troisième zone (13) et ladite deuxième zone d'entrée et de sortie (5);
- troisième moyen de déplacement (15) pour transporter au moins une pièce de ladite troisième zone (12) à ladite quatrième zone (13) et vice versa;
- un robot (R) ou manipulateur configuré pour charger au moins une pièce dans ladite troisième zone (12) et/ou dans ladite quatrième zone (13) et pour décharger au moins une pièce de ladite troisième zone (12) et/ou de ladite quatrième zone (13);
dans laquelle ladite méthode comprend, dans l'ordre, les étapes suivantes:
- traiter une première pièce au moyen de ladite unité d'exploitation (2) et amener simultanément une deuxième pièce à proximité de ladite troisième zone (12) au moyen dudit robot (R) ou manipulateur;
- transporter ladite première pièce de ladite unité d'exploitation (2) vers ladite quatrième zone (13);
- charger ladite deuxième pièce dans ladite troisième zone (12) au moyen dudit robot (R) ou manipulateur; et
- transporter ladite deuxième pièce de ladite troisième zone (12) vers ladite unité d'exploitation (2) et décharger simultanément ladite première pièce de ladite quatrième zone (13) au moyen dudit robot (R) ou manipulateur.

2. Procédé d'utilisation d'une machine-outil (1) pour l'usinage de pièces, comprenant:
- une unité de commande (2) dotée de moyens de commande pour exécuter au moins une opération sur une pièce à usiner;
- une première zone d'entrée et de sortie (3) permettant l'entrée d'au moins une pièce à usiner dans ladite unité de travail; - une deuxième zone d'entrée et de sortie (5) permettant l'entrée d'au moins une pièce à usiner dans ladite unité de travail (2) et la sortie d'au moins une pièce usinée de ladite unité de travail (2);
- une troisième zone (12) adjacente à ladite deuxième zone d'entrée et de sortie (5) du côté opposé à ladite unité de commande (2);
- deuxième moyen de déplacement (14) pour transporter au moins une pièce de ladite troisième zone (12) à ladite deuxième zone d'entrée et de sortie (5) et de ladite deuxième zone d'entrée et de sortie (5) à ladite troisième zone (12);
- une quatrième zone (13) adjacente à ladite troisième zone d'entrée et de sortie (12) du côté opposé à ladite deuxième zone d'entrée et de sortie (5), de sorte que ladite deuxième zone d'entrée et de sortie (12) est disposée entre ladite troisième zone (13) et ladite deuxième zone d'entrée et de sortie (5);
- troisième moyen de déplacement (15) pour transporter au moins une pièce à usiner de ladite troisième zone (12) à ladite quatrième zone (13) et vice versa; et
- un robot (R) ou manipulateur configuré pour charger au moins une pièce dans ladite troisième zone (12) et/ou dans ladite quatrième zone (13) et pour décharger au moins une pièce de ladite troisième zone (12) et/ou de ladite quatrième zone (13);
dans laquelle ladite méthode comprend, dans l'ordre, les étapes suivantes:
- traiter une première pièce à l'aide de ladite unité d'exploitation (2) et charger simultanément une deuxième pièce dans ladite quatrième zone (13) à l'aide dudit robot (R) ou manipulateur;
- transporter ladite première pièce de ladite unité d'exploitation (2) vers ladite troisième zone (12);
- décharger ladite première pièce de ladite troisième zone (12) au moyen dudit robot (R) ou manipulateur; et
- transporter ladite deuxième pièce de ladite quatrième zone (13) vers ladite unité de commande (2).

3. Procédé selon la revendication 1 ou 2, **caractérisé en ce que** ladite machine-outil (1) comprend également des seconds moyens de référence (16) pour attribuer au moins une référence spatiale à au moins une pièce entrant dans ladite unité de commande (2) à partir de ladite seconde zone d'entrée et de sortie (5), dans lequel lesdits seconds moyens de référence (16) comprennent au moins un second élément de butée (17a, 17b) qui est mobile entre une position inactive et une position de repos, dans laquelle ledit au moins un deuxième élément de butée (17a, 17b) n'interfère pas, en cours d'utilisation, avec au moins une pièce transportée depuis ladite deuxième zone d'entrée et de sortie (5) vers ladite unité de commande (2), et une position de fonctionnement, dans laquelle ledit au moins un deuxième élément de butée (17a, 17b) interfère, en cours d'utilisation, avec au moins une pièce transportée depuis ladite deuxième zone d'entrée et de sortie (5) vers ladite unité de commande (2); et **en ce que** ledit procédé comprend l'étape supplémentaire consistant à amener, au moyen dudit robot (R) ou manipulateur, au moins une pièce à usiner disposée sur ladite troisième zone (12) en butée avec ledit au moins un deuxième élément de butée (17a, 17b) dans ladite position de fonctionnement.
